# FASCICULE DE BREVET EUROPEEN

(11) **EP 0 505 299 B1**
(45) Date de publication et mention de la délivrance du brevet: **03.04.1996**
(21) Numéro de dépôt: 92440003.9
(22) Date de dépôt: 16.01.1992
(51) Int. Cl.: B65D 83/20, B65D 47/34, G01F 11/08

(54) **Dispositif doseur adaptable sur des contenants divers**
Dosiervorrichtung anpassbar an verschiedene Behälter
Dosing apparatus adaptable to various containers

(30) Priorité: 11.03.1991 FR 9103079
(43) Date de publication de la demande: 23.09.1992
(73) Titulaire: Crosnier, Daniel, F-76550 Offranville (FR); Dulery, Jean-Marie, F-94210 La Varenne St Maur (FR)
(72) Inventeur: Crosnier, Daniel, F-76550 Offranville (FR); Dulery, Jean-Marie, F-94210 La Varenne St Maur (FR)
(74) Mandataire: Dénoyez, Hubert

(56) Documents cités:
- WO-A-90/05091

## Description

La présente invention a pour objet un dispositif doseur adaptable sur des contenants divers, flacons, tubes, pots, rigides ou souples, utilisés notamment dans le domaine de la pharmacie et de la cosmétologie.

Dans certains domaines, notamment ceux précités, il peut être nécessaire d'extraire des produits liquides ou pâteux de leur contenant en doses plus ou moins précises.

Il existe actuellement des dispositifs doseurs permettant d'obtenir ce résultat, c'est-à-dire la création et l'expulsion d'une dose.

Ainsi le document WO-A-90/05091 décrit un dispositif comprenant une partie tubulaire fermée à sa partie supérieure par une paroi percée axialement d'un orifice obturé par un clapet pour l'évacuation du contenu, ladite partie tubulaire étant recouverte par un capot adapté à se déplacer en translation, la dose à extraire du contenant étant formée dans une chambre expansible délimitée par ladite partie tubulaire et ledit capot.

Les dispositifs doseurs connus a ce jour, s'ils donnent satisfaction dans la création et l'expulsion d'une dose, n'en présentent pas moins des inconvénients, notamment en ce qui concerne leur fabrication.

En effet, pour réaliser un dispositif doseur il est nécessaire d'assembler plusieurs pièces telles que bille, ressorts, clapets, bouchon et autres. Au coût de toutes ces pièces il faut ajouter le coût d'assemblage, manuel ou automatique, qui représente une part importante du coût de fabrication.

De plus ces dispositifs présentent des inconvénients tels qu'une étanchéité insuffisante, et une reprise d'air extérieur vers l'intérieur après la phase d'expulsion, ce qui nécessite d'incorporer au contenu des conservateurs afin d'éviter son oxydation.

Certains dispositifs doseurs connus permettent d'éviter ces inconvénients, mais par adjonction de pièces supplémentaires, ce qui augmente leur coût de fabrication.

La présente invention, telle que définie dans les revendications indépendantes 1 à 3, permet de remédier à tous ces inconvénients des dispositifs connus en proposant un dispositif doseur ne comportant qu'un nombre réduit de pièces facilement assemblables, donc d'un coût de fabrication réduit, et permettant d'accomplir les fonctions des dispositifs doseurs les plus perfectionnés, à savoir: créer la dose, l'expulser, la reproduire, éviter la reprise d'air extérieur vers l'intérieur et rester étanche.

Le dispositif doseur objet de l'invention comporte une pièce intérieure réalisée en un matériau déformable élastique s'adaptant dans une pièce extérieure, ou capot, réalisée en un matériau rigide, l'ensemble pouvant s'adapter sur un contenant soit par l'intermédiaire d'une troisième pièce, soit directement dans le cas où ce contenant présente une partie d'assemblage de forme appropriée, les flacons ou pots sur lesquels peut être adapté ce dispositif doseur pouvant ou non être pourvus d'un système de compression tel qu'un piston.

La pièce intérieure du dispositif selon l'invention est de préférence réalisée par moulage d'un élastomère de synthèse qui lui confère des qualités de déformabilité et d'élasticité permettant d'assurer l'étanchéité du dispositif, de laisser échapper la dose, et d'aspirer le contenu pour créer une nouvelle dose.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en coupe verticale d'un flacon muni d'un dispositif doseur selon l'invention.
- la figure 2a représente une vue en perspective avec arraché partiel de la pièce intérieure de ce dispositif.
- la figure 2b représente une vue en coupe de la même pièce.
- la figure 2c représente une vue partielle en plan de la même pièce.
- la figure 3 représente une vue en coupe verticale du flacon de la figure 1, lorsqu'une pression est appliquée sur le capot.
- la figure 4 représente une vue en coupe verticale d'une variante du dispositif selon l'invention, adapté au moyen d'une troisième pièce sur un contenant classique, en l'occurence un flacon rigide avec tube plongeur.
- la figure 5 représente une vue en coupe d'un flacon équipé d'un dispositif doseur, le flacon étant rigide et avec tube plongeur.
- la figure 6 représente une vue en coupe verticale partielle d'un flacon équipé d'un dispositif doseur dont la pièce intérieure comprend un système d'obturation extérieur.
- la figure 7 représente une vue en coupe verticale partielle d'un flacon muni d'un dispositif doseur, le flacon étant pourvu d'un piston pour la reprise d'air et permettant à l'utilisateur d'en voir le contenu.

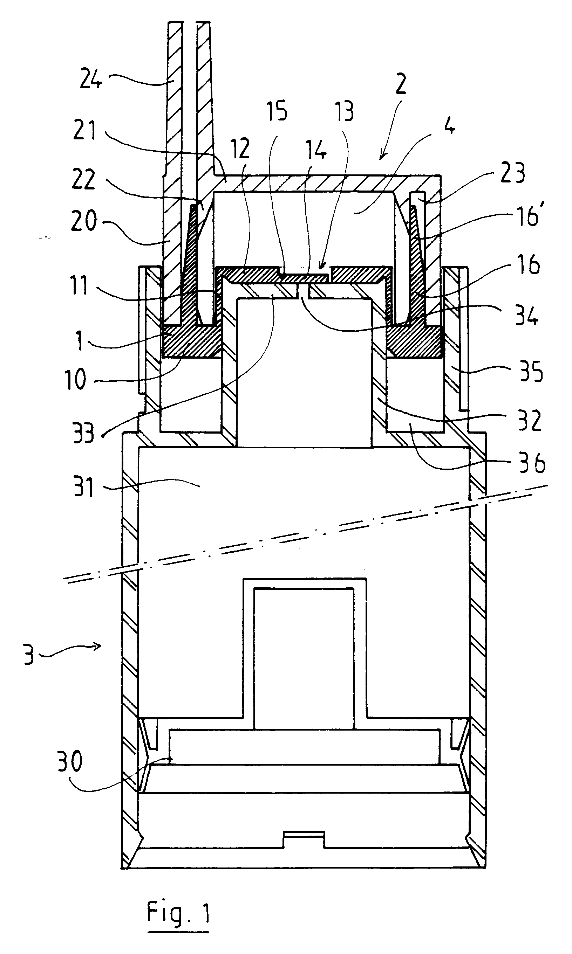

Si on se réfère à la figure 1 on peut voir que le dispositif doseur objet de l'invention comporte une pièce intérieure 1 (réalisée en élastomère de synthèses placée dans un capot 2 (réalisé en matière thermo-plastique), l'ensemble s'adaptant sur un contenant 3.

Le contenant 3 est muni intérieurement, à sa partie basse, d'un piston 30 pouvant coulisser à l'intérieur dudit contenant 3 vers le haut au fur et à mesure du vidage de son contenu 31.

Le contenant 3 est prolongé à sa partie supérieure par une partie cylindrique 32 fermée à sa partie supérieure par une paroi 33 percée axialement d'un orifice 34 d'évacuation du contenu 31. La partie cylindrique 32 est entourée concentriquement d'une cage cylindrique 35 ménageant entre elles un espace annulaire cylindrique 36.

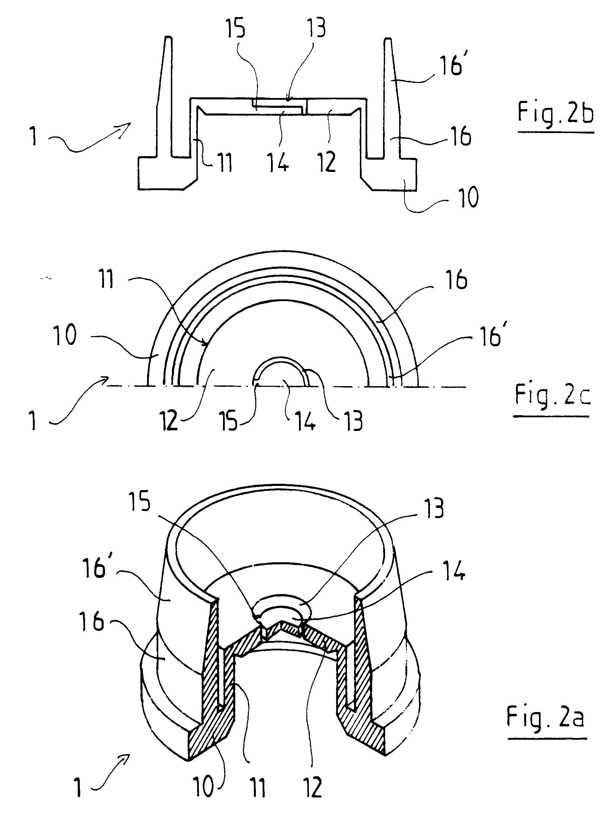

En se réfèrant aux figures 2a, 2b et 2c, on peut voir que la pièce intérieure 1, de forme générale cylindrique, comporte une-partie 10 annulaire dont les dimension diamétrales sont celles de l'espace 36 et dont le bord intérieur est prolongé vers le haut par une partie tubulaire 11 dont l'ouverture supérieure est fermée par une paroi 12 percée en son centre d'un orifice 13 obturé partiellement par un clapet 14 fixé aux bords dudit orifice 13 par une ou plusieurs languettes 15 autorisant le soulèvement dudit clapet 15. La pièce 1 comporte également extérieurement et concentriquement à la partie tubulaire 11, une partie tubulaire 16 dont la partie inférieure, rattachée à la partie annulaire 10, est cylindrique, et est prolongée par une partie supérieure 16' tronconique dont la face intérieure est dans le prolongement de la face intérieure de la partie inférieure.

Le capot 2 du dispositif doseur comporte un corps cylindrique 20 fermé à sa partie supérieure par une paroi 21, et dont le diamètre extérieur est légèrement inférieur au diamètre intérieur de la cage 35. Il comporte intérieurement sur la paroi 21 un rebord annulaire 22 de diamètre extérieur égal au diamètre intérieur de la partie tubulaire 16 de la pièce 1. L'espace annulaire 23 ménagé entre le rebord annulaire 22 et le corps 20 est prolongé par un conduit 24 d'expulsion.

Lors de l'assemblage de la pièce 1 et du capot 2, le capot 2 recouvre étroitement la partie tubulaire 16 de la pièce 1, de manière que la face intérieure du corps 20 soit en contact étroit avec la face extérieure de la partie tubulaire 16, le rebord inférieur du corps 20 reposant sur la partie annulaire 10 de la pièce 1, et l'extrémité supérieure 16' de la partie tubulaire 16 s'insérant dans l'espace annulaire 23, la face intérieure de ladite partie 16' étant en contact étroit avec la face extérieure du rebord annulaire 22. La face interne de la paroi 21 du capot 2 se trouve à une certaine distance de la paroi 12 de la pièce 1, ménageant ainsi un certain volume 4.

Le capot 2 assemblé avec la pièce 1 est placé sur le contenant 3, la partie annulaire 10 étant engagée dans l'espace 36, la partie tubulaire 11 se positionnant sur la partie cylindrique 32, jusqu'à ce que la partie 12 entre en contact avec sa paroi 33, les hauteurs des différentes parties cylindriques étant telles que la distance entre la face inférieure de la partie annulaire 10 de la pièce 1 et le fond de l'espace 36 soit égale à celle séparant la face interne de la paroi 21 et la lace supérieure de la paroi 12 de la pièce 1.

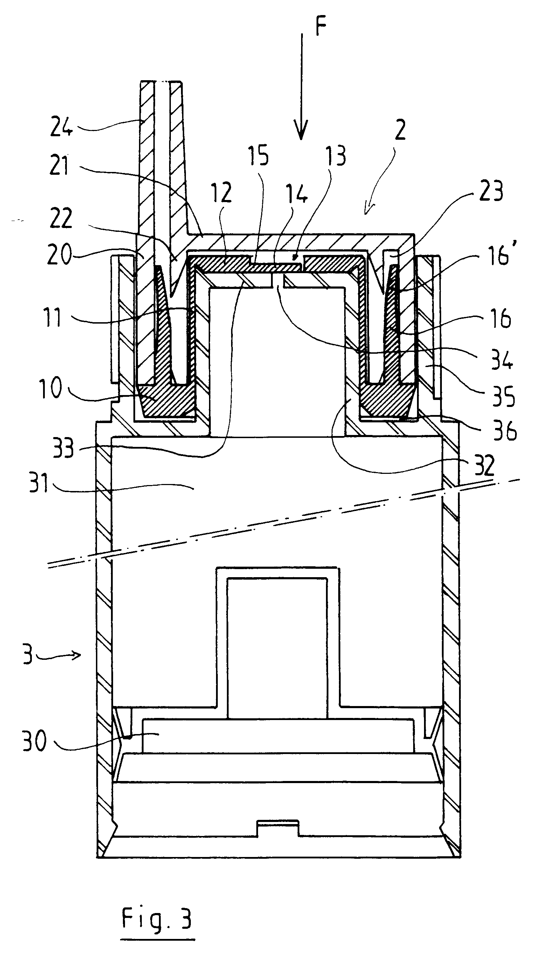

Si on se réfère maintenant à la figure 3, on peut voir que lorsque l'on exerce une pression verticale, symbolisée par la flèche F, sur le capot 2, la pièce 1, qui est élastique, se déforme en s'allongeant au niveau de sa partie tubulaire 11, l'air enfermé dans l'espace 36 pouvant s'échapper grâce à la différence de diamètre existant entre la cage 35 et la partie annulaire 10, le volume 4 est comprimé, et sous l'effet de cette compression la partie supérieure 16′ de la partie tubulaire 16 se décolle du rebord annulaire 22 ce qui permet au contenu du volume 4 de s'échapper par l'espace annulaire 23 puis par le conduit d'évacuation 24. Dans le même temps, cette même compression applique le clapet 14 sur l'orifice 34, empêchant tout échange entre le contenant 3 et le volume 4.

Lorsque l'on relâche la pression sur le capot 2, la partie tubulaire 11 de la pièce 1 retrouve sa forme initiale, ce qui créé une dépression, les parties extrêmes 16′ de la partie tubulaire de la pièce 1 se plaquent sur le rebord annulaire 22, le clapet 14 se soulève, et le contenu 31 est aspiré et vient occuper le volume 4, pendant que le piston 30 monte dans le contenant 3. Il n'y a donc pas de reprise d'air extérieur vers l'intérieur, d'une part l'aspiration s'effectue au niveau du contenu 31, et d'autre part l'air est arrêté par le joint hermétique que constitue la partie 16' appliquée sur le rebord annulaire 22.

On peut comprendre que lorsqu'un tel dispositif doseur est monté sur un contenant souple, du type tube, l'aspiration du contenu lors du relâchement de la pression se traduise par une déformation extérieure dudit contenant.

Le volume 4 est fixé lors de la fabrication, et constitue le volume désiré de la dose.

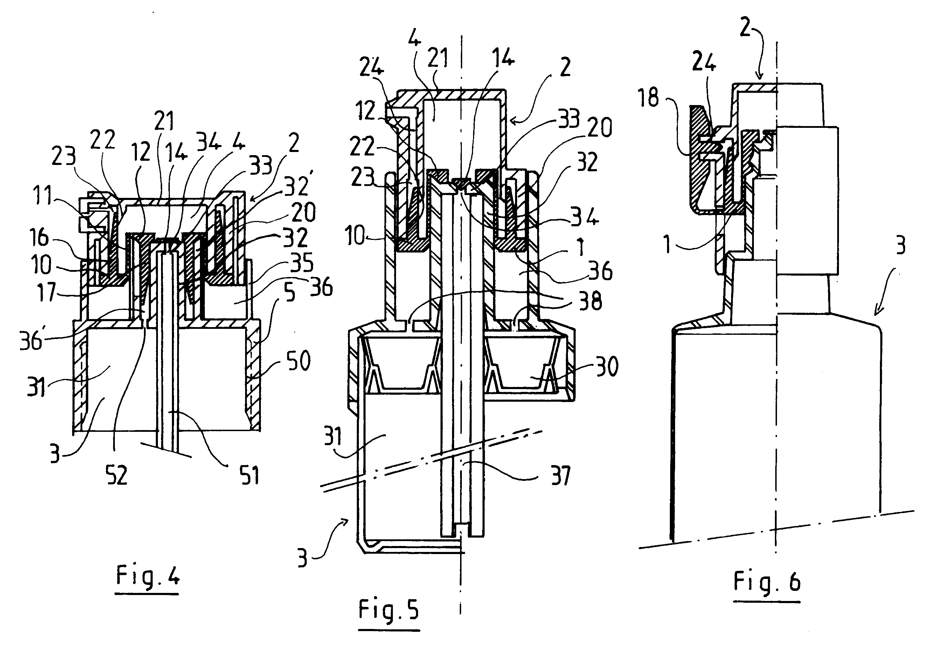

Si on se réfère maintenant à la figure 4, on peut voir que le dispositif peut être adapté sur tout contenant 3 muni à son ouverture d'un pas de vis par exemple, il suffit alors d'adapter sur ledit pas de vis une troisième pièce 5 reprenant les formes de la partie d'assemblage du contenant précédemment décrit, et munie d'un pas de vis 50.

Dans le cas particulier présenté d'un contenant rigide rempli d'un contenu liquide 31 et équipé d'un plongeur 51, il y a nécessité de reprise d'air extérieur, celle-ci s'effectuant par un orifice 52 en communiquant avec l'extérieur. Le dispositif sera en ce cas avantageusement complété par une modification de la pièce 1 qui comporte une partie tubulaire 17 se déployant intérieurement et vers le bas sous la partie 12, dont la fonction est la même que la partie 16 vis-à-vis de l'air extérieur, se déformant pour laisser pénétrer l'air extérieur dans le contenant 3 par l'orifice 52, mais empêchant toute sortie du contenu 31 lorsque le récipient est maintenu tête en bas. La partie tubulaire 17 occupe partiellement l'espace 36' délimité par la pièce cylindrique 32 et une deuxième pièce cylindrique 32' qui l'entoure concentriquement, l'espace 36' communiquant avec l'espace intérieur du contenant 3 par l'orifice 52.

Si on se réfère ensuite à la figure 5 on peut voir que le dispositif doseur selon l'invention peut être adapté sur un contenant 3 muni d'un plongeur 37 débouchant sur l'orifice 34, que la reprise d'air extérieur peut s'effectuer dans le contenant 3 mais sans que cet air n'entre en contact avec le contenu 31. En effet un piston 30 placé dans la partie supérieure du contenant 3 autour du plongeur 37, peut se déplacer vers le bas, repoussant le contenu 31 vers l'embouchure du plongeur 37, l'air extérieur entrant dans le contenant derrière le piston 30 par des orifices 38 pratiqués dans le fond de l'espace 36.

Si on se réfère à la figure 6, on peut voir que lors de l'opération de moulage de la pièce 1 un bouchon extérieur 18 peut être fabriqué, permettant d'obturer le conduit d'évacuation 24.

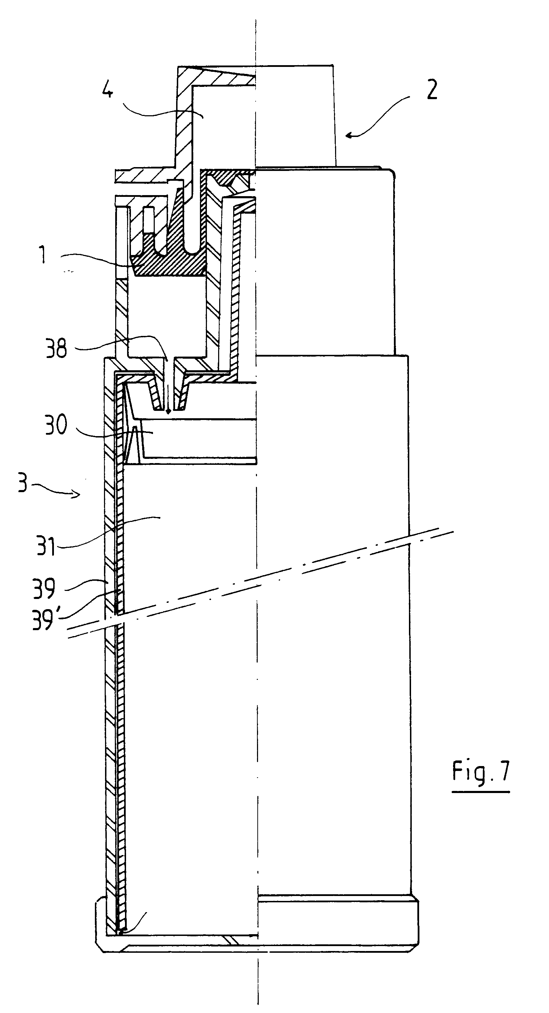

Si on se réfère enfin à la figure 7, on voit qu'il est possible de reprendre partiellement le dispositif de la figure 5, à :avoir un piston travaillant de haut en bas, pour un contenant non muni d'un plongeur et pourvu d'une double paroi, une paroi extérieure 39 transparente et une paroi intérieure 39′ opaque, l'espace entre les deux parois étant communiquant en partie inférieure avec l'intérieur du contenant 3 dans lequel évolue le piston 30. Dans ce cas, lors de la création d'une dose dans le volume 4, le contenu 31 remonte entre les parois 39 et 39′, étant ainsi visible de l'extérieur, pour aller remplir le volume 4, la reprise d'air extérieur se faisant derrière le piston 30, et n'entrant pas en contact avec le contenu 31.

Il est également possible de réaliser un dispositif doseur permettant le mélange de plusieurs produits au moment de la création de la dose dans le volume 4.

Il va de soi que la présente invention ne saurait être limitée à la description qui précède de certains de ses modes de réalisation, susceptibles de subir des modifications sans pour autant sortir du cadre de l'invention.

## Revendications

1. Dispositif doseur adaptable sur des contenants divers rigides ou souples, tels que flacons, tubes ou pots, au niveau d'une partie d'assemblage comprenant une pièce cylindrique (32) fermée à sa partie supérieure par une paroi (33) percée axialement d'un orifice (34) obturé par un clapet (14) pour l'évacuation du contenu (31) du contenant (3), caractérisé en ce qu'il comporte une pièce intérieure (1) réalisée en un matériau déformable élastique placée dans une pièce extérieure, ou capot (2), réalisée en un matériau rigide, l'ensemble s'adaptant sur ledit contenant (3) et la pièce cylindrique (32) étant entourée concentriquement d'une cage cylindrique (35) ménageant entre elles un espace annulaire (36) ; la pièce intérieure (1), de forme globalement cylindrique, comportant une partie annulaire (10) dont le bord intérieur est prolongé vers le haut par une partie tubulaire (11) dont l'ouverture supérieure est fermée par une paroi horizontale (12) percée en son centre d'un orifice (13) obturé partiellement par le clapet (14) fixé aux bords dudit orifice (13), et comportant en outre, extérieurement et concentriquement à la partie tubulaire (11), une partie tubulaire (16) cylindrique rattachée par sa base à la partie annulaire (10) et prolongée par une partie supérieure (16') tronconique dont la face intérieure est dans le prolongement de la face intérieure de la partie inférieure cylindrique (16) ; le capot (2) comportant un corps cylindrique (20) qui enserre étroitement la partie tubulaire (16) de la pièce (1) et dont le diamètre extérieur est légèrement inférieur au diamètre intérieur de la cage (35), le rebord inférieur dudit corps (20) reposant sur la partie annulaire (10) de la pièce (1) et ledit corps cylindrique (20), fermé à sa partie supérieure par une paroi (21), comportant en outre intérieurement, sur ladite paroi (21), un rebord annulaire (22) de diamètre extérieur égal au diamètre intérieur de la partie tubulaire (16) de la pièce intérieure (1), dont l'extrémité supérieure (16') s'insère dans l'espace annulaire (23) qui est ménagé entre ledit rebord annulaire (22) et ledit corps cylindrique (20), et qui se trouve prolongé vers le haut par un conduit (24) d'expulsion, la face intérieure de ladite partie (16') étant en contact étroit avec la face extérieure du rebord annulaire (22), tandis que la face interne de la paroi supérieure (21) du capot (2) se trouve à une certaine distance de la paroi horizontale (12) de la pièce (1), ménageant ainsi un certain espace (4) entre l'une et l'autre ; la partie annulaire (10) de la pièce intérieure (1) étant positionnée dans l'espace (36) existant entre la cage cylindrique (35) et la pièce cylindrique (32) étroitement entourée par la partie tubulaire (11) de ladite pièce intérieure (1), dont la paroi horizontale (12) recouvre sa paroi supérieure (33), les hauteurs des différentes parties cylindriques étant telles que la distance entre la face inférieure de la partie annulaire (10) de ladite pièce intérieure (1) et le fond de l'espace (36) soit égale à celle séparant la face interne de la paroi supérieure (21) dudit capot (2) et la face supérieure de la paroi horizontale (12) de ladite pièce (1).

2. Dispositif doseur adaptable sur des contenants divers rigides ou souples, tels que flacons, tubes ou pots, au niveau d'une partie d'assemblage comprenant une pièce cylindrique (32) fermée à sa partie supérieure par une paroi (33) percée axialement d'un orifice (34) obturé par un clapet (14) pour l'évacuation du contenu (31) du contenant (3), caractérisé en ce qu'il comporte une pièce intérieure (1) réalisée en un matériau déformable élastique placée dans une pièce extérieure, ou capot (2), réalisée en un matériau rigide, l'ensemble s'adaptant sur ledit contenant (3) et la pièce cylindrique (32) étant entourée concentriquement d'une cage cylindrique (35) ménageant entre elles un espace annulaire (36) ; la pièce intérieure (1), de forme globalement cylindrique, comportant une partie annulaire (10) dont le bord intérieur est prolongé vers le haut par une partie tubulaire (11) dont l'ouverture supérieure est partiellement fermée par une paroi horizontale (12) prolongée vers le bas par une partie tubulaire (17) qui occupe partiellement l'espace (36') délimité par la pièce cylindrique (32) et une deuxième pièce cylindrique (32') qui l'entoure concentriquement, ledit espace (36') communiquant avec l' espace intérieur du contenant (3) par un orifice (52) ; la pièce intérieure (1) comportant en outre, extérieurement et concentriquement à la partie tubulaire (11), une partie tubulaire (16) cylindrique rattachée par sa base à la partie annulaire (10) et prolongée par une partie supérieure (16') tronconique dont la face intérieure est dans le prolongement de la face intérieure de la partie inférieure cylindrique (16) ; le capot (2) comportant un corps cylindrique (20) qui enserre étroitement la partie tubulaire (16) de la pièce intérieure (1) et dont le diamètre extérieur est légèrement inférieur au diamètre intérieur de la cage (35), le rebord inférieur dudit corps (20) reposant sur la partie annulaire (10) de la pièce (1) et ledit corps cylindrique (20), fermé à sa partie supérieure par une paroi (21), comportant en outre intérieurement, sur ladite paroi (21), un rebord annulaire (22) de diamètre extérieur égal au diamètre intérieur de la partie tubulaire (16) de la pièce intérieure (1), dont l'extrémité supérieure (16') s'insère dans l'espace annulaire (23) qui est ménagé entre ledit rebord annulaire (22) et ledit corps cylindrique (20), et qui se trouve prolongé vers le haut par un conduit (24) d'expulsion, la face intérieure de ladite partie (16') étant en contact étroit avec la face extérieure du rebord annulaire (22), tandis que la face interne de la paroi supérieure (21) du capot (2) se trouve à une certaine distance de la paroi horizontale (12) de la pièce intérieure (1), ménageant ainsi un certain espace (4) entre l'une et l'autre ; la partie annulaire (10) de la pièce intérieure (1) étant positionnée dans l'espace (36) existant entre la cage cylindrique (35) et la pièce cylindrique (32) étroitement entourée par la partie tubulaire (11) de ladite pièce (1), dont la paroi horizontale (12) recouvre partiellement sa paroi supérieure (33) ; les hauteurs des différentes parties cylindriques étant telles que la distance entre la face inférieure de la partie annulaire (10) de ladite pièce (1) et le fond de l'espace (36) soit égale à celle séparant la face interne de la paroi supérieure (21) dudit capot (2) et la face supérieure de la paroi horizontale (12) de ladite pièce intérieure (1).

3. Dispositif doseur adaptable sur des contenants divers rigides ou souples, tels que flacons, tubes ou pots, au niveau d'une partie d'assemblage comprenant une pièce cylindrique (32) fermée à sa partie supérieure par une paroi (33) percée axialement d'un orifice (34) obturé par un clapet (14) pour l'évacuation du contenu (31) du contenant (3), caractérisé en ce qu'il comporte une pièce intérieure (1) réalisée en un matériau déformable élastique placée dans une pièce extérieure, ou capot (2), réalisée en un matériau rigide, l'ensemble s'adaptant sur ledit contenant (3) et la pièce cylindrique (32) étant entourée concentriquement d'une cage cylindrique (35) ménageant entre elles un espace annulaire (36) qui communique avec l'intérieur du contenant (3) par des orifices (38) ; la pièce intérieure (1), de forme globalement cylindrique, comportant une partie annulaire (10) dont le bord intérieur est prolongé vers le haut par une partie tubulaire (11) dont l'ouverture supérieure est partiellement fermée par une paroi horizontale (12), et comportant en outre, extérieurement et concentriquement à la partie tubulaire (11), une partie tubulaire (16) cylindrique rattachée par sa base à la partie annulaire (10) et prolongée par une partie supérieure (16') tronconique dont la face intérieure est dans le prolongement de la face intérieure de la partie inférieure cylindrique (16) ; le capot (2) comportant un corps cylindrique (20) qui enserre étroitement la partie tubulaire (16) de la pièce intérieure (1) et dont le diamètre extérieur est légèrement inférieur au diamètre intérieur de la cage (35), le rebord inférieur dudit corps (20) reposant sur la partie annulaire (10) de la pièce intérieure (1) et ledit corps cylindrique (20), fermé à sa partie supérieure par une paroi (21), comportant en outre intérieurement, sur ladite paroi (21), un rebord annulaire (22) de diamètre extérieur égal au diamètre intérieur de la partie tubulaire (16) de la pièce intérieure (1), dont l'extrémité supérieure (16') s'insère dans l'espace annulaire (23) qui est ménagé entre ledit rebord annulaire (22) et ledit corps cylindrique (20), et qui se trouve prolongé vers le haut par un conduit (24) d'expulsion, la face intérieure de ladite partie (16') étant en contact étroit avec la face extérieure du rebord annulaire (22), tandis que la face interne de la paroi supérieure (21) du capot (2) se trouve à une certaine distance de la paroi horizontale (12) de la pièce intérieure (1), ménageant ainsi un certain espace (4) entre l'une et l'autre ; la partie annulaire (10) de la pièce (1) étant positionnée dans l'espace (36) existant entre la cage cylindrique (35) et la pièce cylindrique (32) enserrée par la partie tubulaire (11) de ladite pièce intérieure (1), dont la paroi horizontale (12) recouvre sa paroi supérieure (33), les hauteurs des différentes parties cylindriques étant telles que la distance entre la face inférieure de la partie annulaire (10) de ladite pièce (1) et le fond de l'espace (36) soit égale à celle séparant la face interne de la paroi supérieure (21) dudit capot (2) et la face supérieure de la paroi horizontale (12) de ladite pièce intérieure (1).

4. Dispositif selon l'une quelconque des revendications précédentes, caractérisé en ce que sa partie d'assemblage fait partie d'une troisième pièce (5) munie d'un pas de vis (50) en vue de son adaptation sur le contenant (3) muni à son ouverture d'un pas de vis correspondant.

## Claims

1. Dosing apparatus adaptable to various rigid or flexible containers such as bottles, tubes or pots, one part of the assembly comprising a cylindrical piece (32) closed at its upper part by a wall (33) pierced axially by an orifice (34) sealed by a flap (14) for evacuation of the contents (31) of the container (3), characterized in that it comprises an inner piece (1) made of a deformable elastic material placed in an outer piece or cap (2) made of a rigid material, the assembly being adapted to the said container (3) and the cylindrical piece (32) being surrounded concentrically by a cylindrical cage (35) with between them an annular space (36); the inner piece (1) of generally cylindrical form comprising an annular part (10), the inner edge of which is extended upwards by a tubular part (11), the upper opening of which is closed by a horizontal wall (12) pierced in its centre by an orifice (13) partially sealed by the flap (14) fixed at the edges of the said orifice (13) and also comprising, externally and concentrically to the tubular part (11), a cylindrical tubular part (16) attached by its base to the annular part (10) and extended by a truncated upper part (16') of which the inner face is the extension of the inner face of the lower cylindrical part (16); the cap (2) comprising a cylindrical body (20) which closely clasps the tubular part (16) of the piece (1) and of which the external diameter is slightly less than the internal diameter of the cage (35), the lower rim of the said body (20) resting on the annular part (10) of the piece (1) and the said cylindrical body (20), closed at its upper part by a wall (21), comprising also on the inside on the said wall (21) an annular rim (22) of external diameter equal to the internal diameter of the tubular part (16) of the inner piece (1), the upper end (16') of which is inserted in the annular space (23) which is arranged between the said annular rim (22) and the said cylindrical body (20) and which is extended upwards by an expulsion tube (24), the inner face of the said part (16') being in close contact with the outer face of the annular rim (22) whereas the internal face of the upper wall (21) of the cap (2) is at a certain distance from the horizontal wall (12) of the piece (1), thus providing a certain space (4) between one and the other; the annular part (10) of the inner piece (1) being positioned in the space (36) between the cylindrical cage (35) and the cylindrical piece (32) closely surrounded by the tubular part (11) of the said inner piece (1), the horizontal wall (12) of which covers its upper wall (33), the heights of the various cylindrical parts being such that the distance between the lower face of the annular part (10) of the said inner piece (1) and the base of the space (36) is equal to that separating the inner face of the upper wall (21) of the said cap (2) and the upper face of the horizontal wall (12) of the said piece (1).

2. Dosing apparatus adaptable to various rigid or flexible containers such as bottles, tubes or pots, one part of the assembly part comprising a cylindrical piece (32) closed at its upper part by a wall (33) pierced axially by an orifice (34) sealed by a flap (14) for evacuation of the contents (31) of the container (3), characterized in that it comprises an inner piece (1) made of a deformable elastic material placed in an outer piece or cap (2) made of a rigid material, the assembly being adapted to the said container (3) and the cylindrical piece (32) being surrounded concentrically by a cylindrical cage (35) with between them an annular space (36); the inner piece (1) of generally cylindrical form comprising an annular part (10), the inner edge of which is extended upwards by a tubular part (11), the upper opening of which is partially closed by a horizontal wall (12) extended downwards by a tubular part (17) which partially occupies the space (36') delimited by the cylindrical piece (32) and a second cylindrical piece (32') which surrounds it concentrically, the said space (36') communicating with the inner space of the container (3) by an opening (52); the inner piece (1) also comprising, externally and concentrically to the tubular part (11), a cylindrical tubular part (16) attached by its base to the annular part (10) and extended by a truncated upper part (16') of which the inner face is the extension of the inner face of the lower cylindrical part (16); the cap (2) comprising a cylindrical body (20) which closely clasps the tubular part (16) of the inner piece (1) and of which the external diameter is slightly less than the internal diameter of the cage (35), the lower rim of the said body (20) resting on the annular part (10) of the piece (1) and the said cylindrical body (20), closed at its upper part by a wall (21), comprising on the inside, on the said wall (21), an annular rim (22) of external diameter equal to the internal diameter of the tubular part (16) of the inner piece (1), the upper end (16') of which is inserted in the annular space (23) which is arranged between the said annular rim (22) and the said cylindrical body (20) and which is extended upwards by an expulsion pipe (24), the inner face of the said part (16') being in close contact with the outer face of the annular rim (22) whereas the internal face of the upper wall (21) of the cap (2) is at a certain distance from the horizontal wall (12) of the inner piece (1), thus providing a certain space (4) between one and the other; the annular part (10) of the inner piece (1) being positioned in the space (36) between the cylindrical cage (35) and the cylindrical piece (32) closely surrounded by the tubular part (11) of the said piece (1), the horizontal wall (12) of which partially covers its upper wall (33); the heights of the various cylindrical parts being such that the distance between the lower face of the annular part (10) of the said piece (1) and the base of the space (36) is equal to that separating the inner face of the upper wall (21) of the said cap (2) and the upper face of the horizontal wall (12) of the said inner piece (1).

3. Dosing apparatus adaptable to various rigid or flexible containers such as bottles, tubes or pots, one part of the assembly part comprising a cylindrical piece (32) closed at its upper part by a wall (33) pierced axially by an orifice (34) sealed by a flap (14) for evacuation of the contents (31) of the container (3), characterized in that it comprises an inner piece (1) made of a deformable elastic material placed in an outer piece or cap (2) made of a rigid material, the assembly being adapted to the said container (3) and the cylindrical piece (32) being surrounded concentrically by a cylindrical cage (35) with between them an annular space (36) which communicates with the interior of the container (3) by orifices (38); the inner piece (1) of generally cylindrical form comprising an annular part (10), the inner edge of which is extended upwards by a tubular part (11), the upper opening of which is partially closed by a horizontal wall (12), and also comprising, externally and concentrically to the tubular part (11), a cylindrical tubular part (16) attached by its base to the annular part (10) and extended by a truncated upper part (16') of which the inner face is the extension of the inner face of the lower cylindrical part (16); the cap (2) comprising a cylindrical body (20) which closely surrounds the tubular part (16) of the inner piece (1) and of which the external diameter is slightly less than the internal diameter of the cage (35), the lower rim of the said body (20) resting on the annular part (10) of the inner piece (1) and the said cylindrical body (20), closed at its upper part by a wall (21), comprising on the inside, on the said wall (21), an annular rim (22) of external diameter equal to the internal diameter of the tubular part (16) of the inner piece (1), the upper end (16') of which is inserted in the annular space (23) which is arranged between the said annular rim (22) and the said cylindrical body (20) and which is extended upwards by an expulsion tube (24), the inner face of the said part (16') being in close contact with the outer face of the annular rim (22) whereas the internal face of the upper wall (21) of the cap (2) is at a certain distance from the horizontal wall (12) of inner piece (1), thus providing a certain space (4) between one and the other; the annular part (10) of the piece (1) being positioned in the space (36) between the cylindrical cage (35) and the cylindrical piece (32) clasped by the tubular part (11) of the said inner piece (1), the horizontal wall (12) of which covers its upper wall (33), the heights of the various cylindrical parts being such that the distance between the lower face of the annular part (10) of the said piece (1) and the base of the space (36) is equal to that separating the inner face of the upper wall (21) of the said cap (2) and the upper face of the horizontal wall (12) of the said inner piece (1).

4. Device according to any of the preceding claims, characterized in that its assembly part forms part of a third piece (5) fitted with a screw thread (50) with a view to adaptation to the container (3) fitted on its opening with a corresponding screw thread.

## Patentansprüche

1. Dosiervorrichtung, anpaßbar an verschiedene steife oder weiche Behälter, wie Flacons, Tuben oder Töpfe auf der Höhe eines Verbindungsteiles, umfassend ein zylindrisches Teil (32), das in seinem oberen Bereich durch eine Wand (33) abgesperrt ist, die in axialer Richtung von einer Bohrung (34) durchbohrt ist, die ihrerseits durch eine Klappe (14) zum Entnehmen des Inhaltes (31) da Behälters abgesperrt ist, dadurch gekennzeichnet, daß die Vorrichtung ein Innenteil (1) aufweist, das aus elastisch verformbarem Material ausgeführt ist, angeordnet in einem Außenteil oder einer Knappe (2), ausgeführt aus steifern Material, daß die ganze Einheit sich an dem Behälter (3) anpaßt und das zylindrische Teil (32) konzentrisch von einem zylindrischen Käfig (35) umgeben ist, die beide zwischen sich einen Ringraum (36) bilden, daß das Innenteil (1) von im wesentlichen zylindrischer Gestalt einen Ringflansch (10) aufweist, dessen innerer Rand nach oben verlängert ist in Gestalt eines hülsenförmigen Teiles (11), dessen obere Öffnung durch eine horizontale Wand (12) abgesperrt ist, die in ihrem Zentrum von einer Öffnung (13) durchdrungen ist, die ihrerseits teilweise durch die Klappe (14) abgesperrt ist, welche an den Rändem der Öffnung (13) fixiert ist, und daß das Innenteil (1) u.a. außen und konzentrisch zum hülsenförmigen Teil (11) einen zylindrischen hülsenförmigen Teil (16) trägt, der mit seiner Basis am Ringflansch (10) befestigt und mittels eines oberen, kegelstumpfförmigen Teiles (16') verlängert ist, dessen Innenfläche sich in der Verlängerung der Innenfläche des unteren zylindrischen Teiles (16) befindet, daß die Kappe (2) einen zylindrischen Körper (20) umfaßt, das den hülsenförmigen Teil (16) von Teil (1) eng umschließt, und dessen Außendurchmesser geringfügig kleiner ist als der Innendurchmesser des Käfigs (35), daß der untere Rand des Körpers (20) auf dem Ringflansch (10) des Teiles (1) ruht, daß der zylindrische Körper (20), der in seinem oberem Bereich mittels einer Wand (21) abgesperrt ist, u.a. unten an der Wand (21) einen ringförmigen Rand (22) mit einem Außendurchmaser aufweist, der gleich dem Innendurchmesser des hülsenförmigen Teiles (16) des Innenteiles (1) ist, dessen oberes Ende (16') in den Ringraum (23) eingefügt ist, der seinerseits zwischen dem ringförmigen Rand (22) und dem zylindrischen Körper (20) vorgesehen ist, und der nach oben durch einen Ausstoßkanal (24) verlängert ist, daß die Innenfläche des oberen Teiles (16') in engem Kontakt mit der Außenfläche des ringförmigen Randes (22) steht, während die Innenfläche der oberen Wand (21) der Kappe (2) in einem gewissen Abstand von der horizontalen Wand (12) des Teiles (1) angeordnet ist, so daß ein gewisser Zwischenraum (4) zwischen diesen beiden gebildet ist, daß der ringförmige Teil (10) des unteren Teiles (1) im Zwischenraum (36) zwischen dem zylindrischen Käfig (35) und dem zylindrischen Teil (32) angeordnet ist, das eng umschlossen ist vom hülsenförmigen Teil (11) des unteren Teiles (1), dessen horizontale Wand (12) die obere Wand (33) abdeckt, und daß die Höhen der verschiedenen zylindrischen Teile derart bemessen sind, daß der Abstand zwischen der unteren Fläche des ringförmigen Teiles (10) des unteren Teiles (1) und dem Boden des Zwischenraumes (36) gleich jenem ist, der die Innenfläche der oberen Wand (31) der Kappe (2) und der oberen Fläche der horizontalen Wand (12) des Teiles (1) voneinander trennt.

2. Dosiervorrichtung, anpaßbar an verschiedene stete oder weiche Behälter, wie Flacons, Tuben oder Töpfe auf der Höhe eines Verbindungsteiles, umfassend ein zylindrisches Teil (32), das in seinem oberen Bereich durch eine Wand (33) abgesperrt ist, die in axialer Richtung von einer Bohrung (34) durchbohrt ist, die ihrerseits durch eine Klappe (14) zum Entnehmen des Inhaltes (31) des Behälters abgesperrt ist, dadurch gekennzeichnet, daß die Vorrichtung ein Innenteil (1) aufweist, das aus elastisch verformbarem Material ausgeführt ist, angeordnet in einem Außenteil oder einer Kappe (2), ausgeführt aus steifem Material, daß die ganze Einheit sich an dem Behälter (3) anpaßt und das zylindrische Teil (32) konzentrisch von einem zylindrischen Käfig (35) umgeben ist, die beide zwischen sich einen Ringraum (36) bilden, daß das Innenteil (1) von im wesentlichen zylindrischer Gestalt einen Ringflansch (10) aufweist, dessen innerer Rand nach oben verlängert ist in Gestalt eines hülsenförmigen Teiles (11), dessen obere Öffnung teilweise abgesperrt ist durch eine horizontale Wand (12), die nach unten verlängert ist durch einen hülsenförmigen Teil (17), der teilweise den Raum (36') zwischen dem zylindrischen Teil (32) und einem zweiten zylindrischen Teil (32') einnimmt, der dieses konzentrisch umgibt, daß der Raum (36') mit dem Innenraum des Behälters (3) über eine Bohrung (52) kommuniziert, daß das Innenteil (1) u.a. außen und konzentrisch zum hülsenförmigen Teil (11) einen zylindrischen hülsenförmigen Teil (16) aufweist, der an seiner Basis an den Ringflansch (10) angeschlossen und mittels eines oberen kegelstumpfförmigen Teiles (16') verlängert ist, dessen Innenfläche sich in der Verlängerung der Innenfläche des unteren zylindrischen Teiles (16) befindet, daß die Kappe (2) einen zylindrischen Körper (20) aufweist, der den hülsenförmigen Teil (16) das unteren Teiles (1) eng umschließt und dessen Außendurchmesser geringfügig kleiner als der Innendurchmesser des Käfigs (35) ist, daß der untere Rand des Körpern (20) auf dem Ringflansch (10) da Teiles (1) ruht, daß der zylindrische Körper (20), dar an seinem oberen Teil durch eine Wand (21) abgeschlossen ist, u.a. innen an der Wand (21) einen ringförmigen Rand (22) mit einem Durchmesser aufweist, der gleich dem Innendurchmesser des hülsenförmigen Teiles (16) des unteren Teiles (1) ist, dessen oberes Ende (16') in den Ringraum (23) eingefügt ist, dar sich zwischen dem ringförmigen Rand (22) und dem zylindrischen Körper (20) befindet, und der nach oben verlängert ist, durch einen Ausstoßkanal (24), daß sich die Innenfläche des Teils (16) mit dar Außenfläche des ringförmigen Randes (22) in engem Kontakt befindet, während die Innenfläche der oberen Wand (21) der Kappe (2) in einem gewissen Abstand zur horizontalen Wand (12) des unteren Teiles (1) angeordnet ist, so daß ein gewisser Zwischenraum (4) zwischen den beiden verbleibt, daß der Ringflansch (10) des unteren Teiles (1) im Zwischenraum (36) zwischen dem zylindrischen Käfig (35) und dem zylindrischen Teil (32) angeordnet ist, das vom hülsenförmigen Teil (11) des Teiles (1) eng umschlossen ist, dessen horizontale Wand (12) teilweise die obere Wand (33) abdeckt, und daß die Höhen der verschiedenen zylindrischen Teile derart gewählt ist, daß der Abstand zwischen der unteren Fläche des Ringflansches (10) des Teiles (1) und dem Boden des Zwischenraumes (36) gleich jenem sind, der die Innenfläche der oberen Wand (21) der Kappe (2) und der oberen Fläche der horizontalen Wand (12) des unteren Teiles (1) voneinander trennt,

3. Dosiervorrichtung, anpaßbar an verschiedene steife oder weiche Behälter, wie Flacons, Tuben oder Töpfe auf der Höhe eines Verbindungsteiles, umfassend ein zylindrisches Teil (32), das in seinem oben Bereich durch eine Wand (33) abgesperrt ist, die in axialer Richtung von einer Bohrung (34) durchbohrt ist, die ihrerseits durch eine Klappe (14) zum Entnehmen des Inhaltes (31) des Behälters abgesperrt ist, dadurch gekennzeichnet, daß die Vorrichtung ein Innenteil (1) aufweist, das aus elastisch verformbarem Material ausgeführt ist, angeordnet in einem Außenteil oder einer Kappe (2), ausgeführt aus steifem Material, daß die ganze Einheit sich an dem Behälter (3) anpaßt und das zylindrische Teil (32) konzentrisch von einem zylindrischen Käfig (35) umgeben ist, die beide zwischen sich einen Ringraum (36) bilden, der mit dem Inneren des Behälters (3) über Bohrungen (38) kommuniziert, daß das innere Teil (1) von im wesentlichen zylindrischer Form einen Ringflansch (10) aufweist, dessen Innenrand nach oben durch einen hülsenförmigen Teil (11) verlängert ist, dessen obere Öffnung teilweise durch eine horizontale Wand (12) abgesperrt ist und u.a. außen und konzentrisch zum hülsenförmigen Teil (11) einen hülsenförmigen zylindrischer Teil (16) aufweist, der an seiner Basis an den Ringflansch (10) angeschlossen und durch einen oberen kegelstumpfförmigen Teil (16') verlängert ist, dessen Innenfläche sich in der Verlängerung der Innenfläche des unteren zylindrischen Teiles (16) befindet, daß die Kappe (2) einen zylindrischen Körper (20) aufweist, der den hülsenförmigen Teil (16) das unteren Teiles (1) eng umschließt, und dessen Außendurchmesser geringfügig kleiner ab der Innendurchmesser des Käfigs (35) ist, daß der untere Rand des Körpers (20) auf dem Ringflansch (10) des unteren Teiles (1) ruht, daß der zylindrische Körper (20) der in seinem oberen Bereich durch eine Wand (21) abgesperrt ist, u.a. innen an der Wand (21) einen ringförmigen Rand (22) aufweist, mit einem Durchmesser, der gleich dem Innendurchmesser des hülsenförmigen Teiles (16) des unteren Teiles (1) ist, dessen oberes Ende (16') in den ringförmigen Zwischenraum (23) eingefügt ist, der sich zwischen dem ringförmigen Rand (22) und dem zylindrischen Körper (20) befindet, und der nach oben durch einen Ausstoßkanal (24) verlängert ist, daß die Innenfläche des Teiles (16) mit der Außenfläche des ringförmigen Randes (22) in engem Kontakt steht, während die Innenfläche der oberen Wand (21) der Kappe (2) in einem gewissen Abstand von der horizontalen Wand (12) des unteren Teils (1) angeordnet ist, so daß zwischen diesen beiden ein Zwischenraum (4) verbleibt, daß der hülsenförmige Teil (10) des Teiles (1) im Raum (36) angeordnet ist, der zwischen dem zylindrischen Käfig (35) und dem zylindrischen Teil (32) verbleibt, der seinerseits von dem hülsenförmigen Teil (11) des unteren Teiles (1) umschlossen ist, dessen horizontale Wand (12) die obere Wand (33) abdeckt, und daß die Höhen der verschiedenen zylindrischen Teile derart gewählt sind, daß der Abstand zwischen der unteren Fläche des Ringflansches (10) des Teiles (1) und dem Boden des Zwischenraumes (36) gleich jenem ist, der die innere Fläche der oben Wand (21) der Kappe (2) und die obere Fläche der horizontalen Wand (12) des unteren Teiles (1) voneinander trennt.

4. Vorrichtung nach einem der vorausgegangenen Ansprüche, dadurch gekennzeichnet, daß sein Verbindungsteil Bestandteil eines dritten Teiles (5) ist, das mit einem Gewindegang (50) zum Zwecke der Verbindung mit dem Behälter (3) ist, der seinerseits an seiner Öffnung mit einem entsprechenden Gewindegang versehen ist.
